# EUROPEAN PATENT APPLICATION

(11) **EP 4 811 715 A1**
(43) Date of publication of application: **23.09.2026**
(21) Application number: 25164566.9
(22) Date of filing: 18.03.2025
(51) Int. Cl.: H04L 9/00

(54) **METHOD AND SYSTEM FOR DETECTING FAULT INJECTION ATTACKS IN A DIGITAL SIGNATURE**

(71) Applicant: NXP B.V., 5656 AG Eindhoven (NL)
(72) Inventor: Schoenauer, Markus, 5656AG Eindhoven (NL); Schneider, Tobias, 5656AG Eindhoven (NL); Bronchain, Olivier, 5656AG Eindhoven (NL)
(74) Representative: Colaiuda, Antonella

(57) **Abstract**

The present disclosure describes a method and a system for detecting fault injection attacks in a digital signature. The method comprises the steps of: initiating a first counter configured to count a number of generations of digital signature candidates, initiating a second counter configured to count a number of digital signature candidates which fail security checks, incrementing the first counter each time that a digital signature candidate is generated, selecting a size β and parsing the first counter in block intervals of said size β, performing at least one security check on each digital signature candidate generated, incrementing the second counter in response to a digital signature candidate failing at least one security check, and in response to the first counter being an integer multiple of β: assigning to the last completed block interval of said size β a third counter, such third counter configured to count the number of failed security checks in the last completed block interval, assigning to the last completed block interval of said size β a third counter, such third counter configured to count the number of failed security checks in the last completed block interval, comparing the third counter with a criterion based at least on a probabilistic threshold and on said size β. In response to the third counter not fulfilling the criterion the method detects that at least one fault injection attack has been performed.

## Description

### TECHNICAL FIELD

The present disclosure related to a method for detecting fault injection attacks in a digital signature scheme. The present disclosure further relates to a system for performing such a method.

### BACKGROUND

A digital signature scheme is a mathematical cryptographic scheme which provides a way for each user to sign messages or documents so that the signatures can later be verified from a third party. Fault injection attacks (FIA), or fault attacks for short, are a class of physical attacks against cryptographic schemes. Through FIA the attacker directly influences the execution of the digital signature scheme, mostly trying to manipulate the data used in the calculations. From the public output that is the result of a faulted execution, information about sensitive values can be learned.

### SUMMARY

In a first aspect of the present disclosure, a method for detecting fault injection attacks in a digital signature scheme is disclosed. The method comprises the steps of: initiating a first counter configured to count a number of generations of a plurality of digital signature candidates, initiating a second counter configured to count a number of digital signature candidates which fail security checks, incrementing the first counter each time that a digital signature candidate is generated, selecting a size β and parsing the first counter in block intervals of said size β. The method further comprises the steps of: performing at least one security check on each digital signature candidate generated, incrementing the second counter in response to a digital signature candidate failing at least one security check, and in response to the first counter being an integer multiple of β: assigning to the last completed block interval of said size β a third counter, such third counter configured to count the number of failed security checks in the last completed block interval, assigning to the last completed block interval of said size β a third counter, such third counter configured to count the number of failed security checks in the last completed block interval, comparing the third counter with a criterion based at least on a probabilistic threshold and on said size β. In response to the third counter not fulfilling the criterion the method detects that at least one fault injection attack has been performed.

In one or more embodiments of the first aspect of the present disclosure, the method may comprise further the step of: selecting one size of β and resetting the third counter after comparing it with the criterion.

In one or more embodiments of the first aspect of the present disclosure, more than one size β is selected and for each selected size β the method further comprising the step of: storing the third counter of the last completed block interval of the selected size β and in response to a new block interval of the selected size β being completed: assigning to a fourth counter the stored third counter, and updating the third counter as a difference between the second counter and the fourth counter.

In one or more embodiments of the first aspect of the present disclosure, the at least one criterion is set by a binomial test.

In one or more embodiments of the first aspect of the present disclosure, the at least one criterion is set by a left-sided binomial test if the total number of failed security checks is lowered by at least one fault injection attack.

In one or more embodiments of the first aspect of the present disclosure, the at least one criterion is set by a right-sided binomial test if the total number of failed security checks is increased by at least one fault injection attack.

In one or more embodiments of the first aspect of the present disclosure, the probabilistic threshold is further calculated as function of at least a significance level.

In one or more embodiments of the first aspect of the present disclosure, the size β is selected from a list.

In one or more embodiments of the first aspect of the present disclosure, the digital signature scheme is chosen from one among a FALCON-512 digital signature scheme, a FALCON-1024 digital signature scheme, a Dilithium-II digital signature scheme, a Dilithium-III digital signature scheme, a Dilithium-V digital signature scheme and a module-lattice-based signature.

In one or more embodiments of the first aspect of the present disclosure, the first counter and the second counter are reset when they reach a predetermined value.

In a second aspect of the present disclosure, there is provided a system comprising a digital signature generation unit configured to generate a plurality of digital signature candidates, a controller configured to perform at least one security check on each digital signature candidate created; a processor configured to: initiate a first counter configured to count a number of generations of a plurality of digital signature candidates, initiate a second counter configured to count a number of digital signature candidates which fail security checks, increment the first counter each time that a digital signature candidate is generated, parse the first counter in block intervals of a size β, and increment the second counter in response to a digital signature candidate failing at least one security check. The system further comprises a communication bus, configured to connect the controller, the digital signature generation unit and the processor, wherein the processor is further configured to: detect if the current first counter is an integer multiple of the β, and in response to such detection: assign to the last completed block interval of the size β a third counter, such third counter configured to count a number of failed security checks registered in the last completed block interval, compare the third counter with a criterion based at least on a probabilistic threshold and on β, and in response to the third counter not fulfilling the criterion: detect that at least one fault injection attack has been performed.

In one or more embodiments of the second aspect of the present disclosure, the system further comprises a user interface.

In one or more embodiments of the second aspect of the present disclosure, the user interface is configured to emit a warning signal in response to detecting the at least one fault injection attack.

In one or more embodiments of the second aspect of the present disclosure, the system further comprises a storage unit connected to the communication bus.

In one or more embodiments of the second aspect of the present disclosure, the storage unit is configured to further store the first index and/or the second index and/or the third index and/or the block interval length β.

### DESCRIPTION OF DRAWINGS

Embodiments of the present disclosure will be described in more detail with reference to the appended drawings, in which:
Figure 1a, 1b and 1c show a simplified flow chart according to a first aspect of the present disclosure.
Figure 2a shows an algorithm according to a first aspect of the present disclosure.
Figure 2b shows an algorithm according to a first aspect of the present disclosure.
Figure 3 depicts a simplified flow chart of the timeline of the present disclosure.
Figure 4 shows an algorithm according to a first digital signature scheme of the present disclosure.
Figure 5 shows an algorithm according to a second digital signature scheme of the present disclosure.
Figure 6 shows a system according to a second aspect of the present disclosure.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DESCRIPTION OF EMBODIMENTS

Post-quantum (PQ) digital signature schemes are assuming a primary role in cryptography. PQ digital signature schemes may be used for authenticating software updates, protecting in this way the users of the software from the execution of malicious code. Another common application could be server authentication in the Transport Layer Security (TLS) protocol. PQ digital signature schemes may however be targeted by physical attacks. Examples of those attacks are fault injection attacks where faults are introduced in the computation, with the scope of recovering secret information from the faulted output. In the present disclosure a method and a system for detecting such fault injection attacks are disclosed.

In general terms, each time that a request of signing a message is sent to a signing device, the signing device generates digital signature candidates based on a digital signature scheme. Each of those digital signature candidates is subject to at least one security check. There is a certain probability *pₒ* that the digital signature candidate will fail at least one security check and be rejected. Generally, for each signature request several digital signature candidates are generated before one digital signature is accepted for signing. Considering the amount of signature requests received by a signing device during its lifetime, a quantity *nₑₓₑ* of digital signature candidates would be generated. One would expect that on average, a number *nᵣₑⱼ* of such digital signature candidates will be rejected with a given probability *p*₀. A fault injection attack is expected to increase or decrease this number: by monitoring the actual failure rate of the digital signature candidates, and statistically comparing the actual failure rate with the expected failure rate, a fault injection attack may be detected. The present disclosure provides calculation-efficient methods to do so, by separately considering block intervals of digital signature candidates (each block interval having a size β which represents the number of digital signature candidate generated in said block interval), comparing an actual rejection rate within that block with an expected rejection rate, and statistically analysing any variation between the two to decide whether a fault injection attack has occurred. For calculation efficiency, the comparison and analysis are generally only performed when the block is "full". The method may consider a plurality of different sizes or "blocksizes" β. For example, two sizes of beta may be considered: β=8000 and β=5000. When a first 20,000 candidate-generations are completed, they might be considered as two completed blocks with size β=8000 and one incomplete block with 4,000, and, at the same time, as 4 completed blocks of size β=5,000. If p₀ = 0.2%, one would "expect" 10 rejections in each of the β=5,000 blocks and 16 rejections in each of the β=8,000 blocks, so a rejection count of 50 rejections within the last block would likely be due to an injection fault attack.

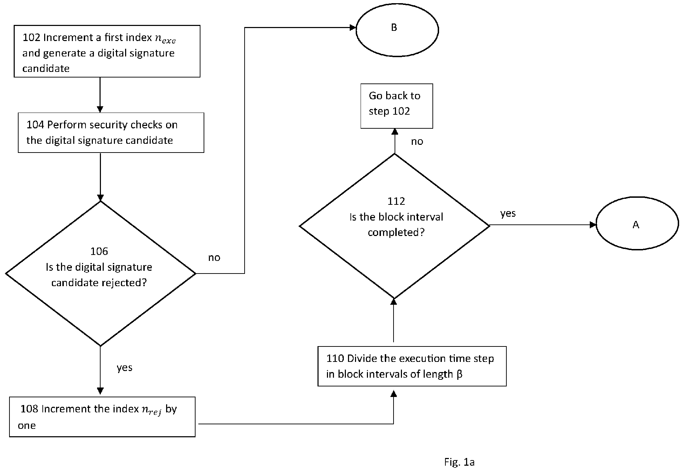

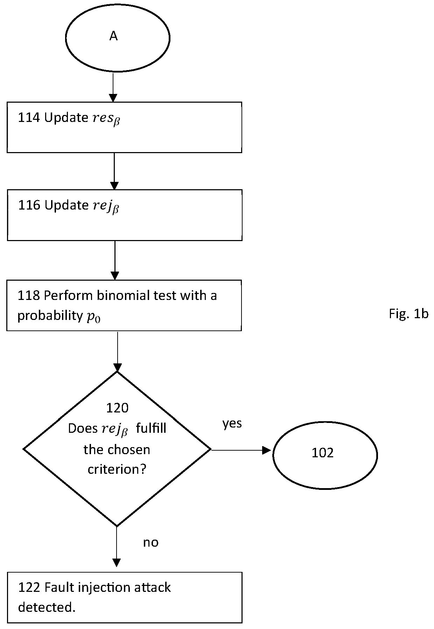

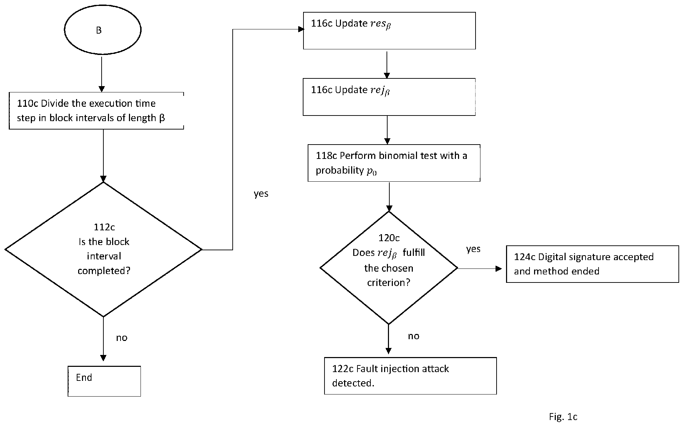

Figure 1a shows a simplified flow chart according to a first embodiment of the present disclosure. In step (102) a counter *nₑₓₑ* is created. Such counter counts the number of digital signature candidates generated. At each *nₑₓₑ* a digital signature candidate is created. The counter *nₑₓₑ* is incremented by one each time that a digital signature candidate is created. In other words, the value of *nₑₓₑ* corresponds to a running total of created digital signature candidates. The digital signature candidate may be a digital signature candidate created according to the digital signature scheme FALCON (Fast Fourier lattice-based compact signatures over NTRU) or to the digital signature scheme Dilithium or to the module-lattice-based digital signature scheme (ML-DSA), or to any other suitable digital signature scheme. In a second step (104) security checks are performed on each digital signature candidate. The security checks to be performed depend on the specific signature scheme used. Each digital signature scheme may set up specific security checks: a digital signature candidate should pass the security checks to be accepted as a valid digital signature, which could eventually be used to sign a message. Examples of security checks may be the Euclidean norm or the absolute norm. In this kind of security check the difference between the absolute value of the observed digital signature candidate and the absolute value of the expected digital signature candidate is calculated. In a third step (106) of the present method, it is checked if the digital signature candidate does not satisfy the security checks. If this is not the case, i.e. the digital signature candidate satisfies the security checks, then the method goes to the step (110c) in Fig. 1c, which will be explained later. This step is shown in Fig. 1a, by the step 106 "is the digital signature candidate rejected" being answered "no", and the method progressing to "B". In the case that the digital signature candidate does not satisfy the security checks, then the digital signature candidate is rejected. A rejection takes place each time that a digital signature candidate fails at least one security check. If a rejection takes place, then a fourth step of the present method is executed (108). A counter *nᵣₑⱼ* is incremented by one each time that a digital signature candidate fails at least one security check, i.e. each time that a digital signature candidate is rejected. The counter *nₑₓₑ* and the counter *nᵣₑⱼ* may each be referred to as global counter. In a fifth step (110) the counter *nₑₓₑ* may be parsed in one or more block intervals. The block intervals may have the same size β or different sizes β. The size β of the block intervals may be defined as the number of digital signature candidates that have been generated in such block interval. The size β of the block intervals may be stored in a list and may be defined by a user before starting the method at step (102). More than one size β could be used. The block intervals may be associated with a counter *rej_{β}* (rejection counter) and with a counter *res_{β}* (residual counter). Those two counters may each be referred to as local counter, as they are used locally in the block intervals. The counter *rej_{β}* represents the number of rejections *nᵣₑⱼ* counted or registered in the last completed block interval. The counter *res_{β}* represents the total number of rejections for past block intervals which have been completed. Both those counters are linked to the size β. As an example, a counter *rej*₁₀₀₀ = 400 means that in a block interval of size β=1000 (i.e. a block interval with 1000 digital signature candidates) 400 rejections have been counted. A block interval is defined as complete when it has reached its full size β. This is checked in a sixth step (112). If a block interval is completed, then the method of the present disclosure continues to "A" on Fig. 1a, that is to say, it continues at step (114) in Fig. 1b. If a block interval is not completed, then the method of the present disclosure returns to step (102) in Fig. 1.

Discussing now Fig. 1b, at step (114) each time that a block interval is completed, and a new block interval is started, the value of *res_{β}* is updated (114) as: ${res}_{β} = {res}_{β} + {rej}_{β}$

Consequently, the rejection counter for the currently started block interval, which is still not completed, may be calculated as (116) ${rej}_{β} = {n}_{rej} - {res}_{β}$

It should be noted that the update of the counters *rej_{β}* and *res_{β}* takes place when *nₑₓₑ =* 0 *mod* and not at each step *nₑₓₑ.* This has the effect of lowering the computational effort.

The rejection counter *rej_{β}* as calculated in Eq. 2 may be stored and compared to a probabilistic threshold or critical value c related to a probability *p*₀. The probability *p*₀ is a numerical value which represents the probability that a (normally derived) digital signature candidate would fail at least one security check i.e. the probability that a general digital signature candidate is rejected. The probability *p*₀ may be a predetermined value. The probabilistic threshold or critical value c may be calculated starting from the probability *p*₀ and the chosen size β, as it will be discussed later.

The comparison between the probabilistic threshold or critical value c and the rejection counter *rej_{β}* may be done by performing a binomial test (118) linked to the probability *p*₀. A binomial test is a statistical test, which involves at least one random variable X. Such random variable may take the values 1 (success) and 0 (failure), with unknown success probability *P[X* = *1] = p.* According to the present disclosure the random variable X identifies the digital signature candidate. The digital signature candidate may then take the value 1 (success) if it passes the security checks. The digital signature may take the value 0 if it fails at least one security check, i.e. if the digital signature candidate is rejected. The binomial test is usually started with the hypothesis that *p = p*₀ for some fixed *p*₀ ∈ [0, 1]. By observing the number of rejections in the block intervals, the hypothesis is tested. In particular, there are two alternative hypotheses to *p = p*₀ that may be tested in order to detect a fault injection attack: *p* < *p*₀ or *p* > *p*₀. For both hypotheses a respective test may be performed. The test for *p* > *p*₀ may be called right-sided test, while the test for *p* < *p*₀ may be called left-sided test. The choice between *p* < *p*₀ or *p* > *p*₀ depends on the type of fault injection attacks considered. If a fault injection attack lowers the rejection probability, then a left-sided test should be performed. If a fault injection attack increases the rejection probability, then a right-sided test should be performed. Those two tests are also referred to as criteria which the counter *rej_{β}* should fulfill. The right-sided test as well as the left-sided test may use the assumption that the random variable X is binomially distributed according to *D*(*n,p*), where *p* is the success probability and *n* is the number of observations of the random variable X. Both the right-sided test and the left-sided test may be function of at least two parameters: the significance level α and the size of the block intervals. The significance level may be defined as the probability to reject the null hypothesis (no correlation between the data set studied), given that the null hypothesis is true. A right-sided binomial test with significance level α may be calculated as ${\sum }_{i = c}^{b} {D}_{n , {p}_{0}} \left(i\right) \leq α$ Where c is defined as the lowest value which satisfies Eq. 3. The parameter c may be defined as "critical value" or probabilistic threshold. If the observed number of rejections is at least as high as the critical value c then the null hypothesis is rejected and the hypothesis *p* > *p*₀ is accepted.

A left-sided binomial test with significance level α may be calculated as ${\sum }_{i = 0}^{c} {D}_{n , {p}_{0}} \left(i\right) \leq α$ Where c is defined as the highest value which satisfies Eq. 4. If the observed number of rejections is equal to or lower than the critical value c then the null hypothesis is rejected and the hypothesis *p* < *p*₀ is accepted.

Referring to Fig. 1b, the comparison between the counter *rej_{β}* with a specific criterion based on the probabilistic threshold or critical value c is done in step (120). There are two criteria which may be chosen, and which are based respectively on Eq. 3 and Eq. 4: *rej_{β} > c or rej_{β} <* c. Which criterion should be chosen depends on the fault injection attack suspected and on the digital signature scheme used. If the counter *rej_{β}* fulfills the chosen criterion, then the method goes back to step (102). If the counter *rej_{β}* does not fulfill the chosen criterion, then it is determined that a fault injection attack has been performed (122).

Fig. 1c shows a further embodiment of the present disclosure, i.e. the case in which the signature digital candidate passed the at least one security check at step (106) of Fig. 1a. In this case, step (110c) is executed: the counter *nₑₓₑ* is then parsed in block intervals of size β. Step (112c) is executed as well, and it is checked if the block interval is completed. If the block interval was not completed, then the method of the present disclosure is ended. If the block interval was completed, the method continues to the steps 116c-120c, which are equivalent to steps 116-120 described in Fig. 1b. At step 120c, if *rej_{β}* fulfills the chosen criteria, then the method of the present disclosure is ended, and the digital signature candidate is accepted (step 124c). Otherwise, it is determined that a fault injection attack has been performed (122c). It should be noticed that the steps described in Fig. 1a, 1b and 1c are executed each time that a signature request is received.

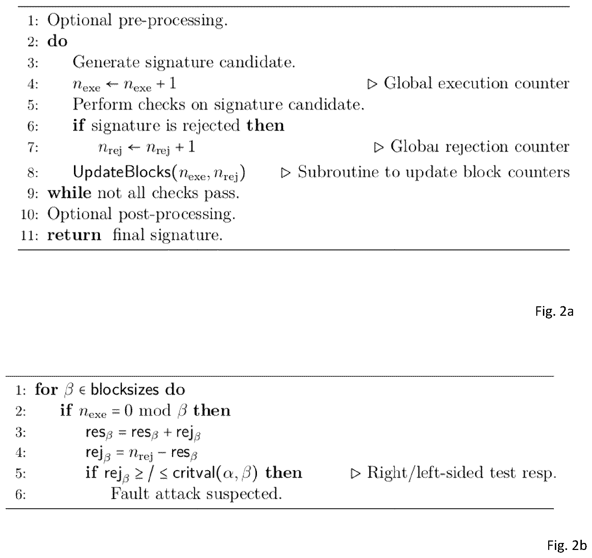

Fig. 2a shows an algorithm for detecting a fault injection attack according to a first aspect of the present disclosure. The algorithm starts with a loop for the generation of a digital signature candidate: each time that a digital signature candidate is created, a global counter *nₑₓₑ* is incremented (Line 4). The next step is to perform security checks on the digital signature candidate (Line 5 to 8). If the digital signature candidate fails to pass at least one security check, then the digital signature candidate is rejected. Each time that a digital signature candidate is rejected the global counter *nᵣₑⱼ* is incremented (Line 7). A routine *UpdateBlocks* is then called in both cases, i.e. both when a digital signature candidate is rejected and when a digital signature candidate is accepted as valid digital signature candidate. The routine will be described in more details in Fig. 2b. The loop is repeated for each generated digital signature candidate. Once that at least one digital signature candidate is accepted, the loop is finished. After some optional post-processing steps the final digital signature candidate is released. The global counters *nₑₓₑ* and *nᵣₑⱼ* are usually not reset at the end of routine. The routine is then repeated each time that a request to sign a message is received.

Fig. 2b shows the algorithm for the routine *UpdateBlocks.* The routine takes place in the block intervals in which the counter *nₑₓₑ* is parsed. The goal of this routine is to create and to update the local counters *rej_{β}* and *res_{β}* (Line 2 to line 4), which are both used in the block intervals. It should be noted that the two local counters are updated if *nₑₓₑ =* 0 *mod β*, i.e. when the counter *nₑₓₑ* is an integer multiple of β. The skilled person will appreciate that criterion can equally be written as "*nₑₓₑ =* 0 *mod β*", which is how it is depicted in Fig. 2b. This has the effect to reduce the computational cost, as the update is not performed at each counter *nₑₓₑ.* The value of β may be chosen before starting the method of the present disclosure. The number of block intervals and their size β can be set according to the specific use-case of the present method. Several sizes β could be used at the same time. As it will be explained later, the value of β is one of the parameters for the calculation of the critical value. As next step of the routine *UpdateBlocks* an update value of the counters *rej_{β}* and *res_{β}* is calculated according to Eq. 1 and Eq. 2 (line 3 and line 4 of the algorithm in Fig. 2b). After the update of the local counters a binomial test is performed on the updated local counter *rej_{β}.* The binomial test is represented by the function *critva.l* As explained above the test is a comparison of the local counter *rej_{β}* with a probabilistic threshold or critical value c (here represented by the function *critval,* line 5 of the algorithm in Fig. 2b), which is a function of at least two parameters: the significance level α and the size β of the block intervals. The probabilistic threshold or critical value is further linked to the probability *p*₀ by Eq. 3 or Eq. 4. The probabilistic threshold or critical value is usually precomputed and stored in at least one table. As explained above, depending on the digital signature scheme used and on the fault injection attack suspected, a right-sided test or a left-sided test may be performed. Those two tests are also referred to as criteria which the counter *rej_{β}* should fulfill. If the counter *rej_{β}* does not fulfill the chosen criterion, then it is determined that a fault injection attack has been performed.

For significance purpose high values of β (β>10^3) are preferred, as they allow for more significant statistical calculations. More than one value of β may be chosen. For example, before starting the method, two values of β could have been chosen: β=10,000 and β = 50,000. The loop in the routine *UpdateBlocks* will be then executed each time that *nₑₓₑ* is an integer multiple of β=10,000 and/or β = 50,000. As example, if *nₑₓₑ* has reached the value 10,000 the loop in the routine *UpdateBlocks* will be executed for β=10,000 but not for β = 50,000 because *nₑₓₑ* = 10,000 is not an integer multiple of β = 50,000. As a consequence, the binomial test will be performed by comparing *rej*_{10,000} with the critical value calculating using the value *p*₀ for the used digital signature scheme, the chosen significance α and the value of β=10,000. In another example *nₑₓₑ* may have reached the value 50,000. The loop in the routine *UpdateBlocks* will be then executed both for β=10,000 and for β = 50,000 because *nₑₓₑ =* 50,000 is an integer multiple of β = 50,000 and of β = 10,000. As a consequence, the binomial test will be performed once by comparing *rej*_{10,000} and *rej*_{50,000} with the respective critical value. Choosing multiple sizes β may be convenient as it is not known a priori how many digital signature candidates will be generated by the signing device, i.e. which value *nₑₓₑ* will reach. By choosing several sizes of β the possibility that at least one binomial test with a statistically significant value of β will be performed is increased.

In one embodiment, only one value of β may be chosen. In this case a reset may happen each time that a block interval is completed, as there is no need to keep track of the rejections happened in the previous completed block intervals by using the local counter *res_{β}.* Accordingly to line 4 of the algorithm in Fig. 2b, the local counter *rej_{β}* may be calculated as *rej_{β} = nᵣₑⱼ.* After the calculation of the binomial test according to line 5 of Fig2b a reset of *rej_{β}* may then take place. This has the effect to improve the computational time by lowering the memory requirements.

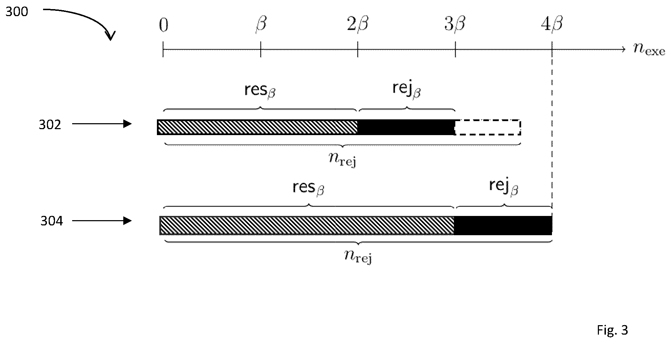

Fig. 3 shows an exemplary timeline 300 according to one embodiment of the present disclosure. The timeline is defined by the number of digital signature candidates' generations *nₑₓₑ* which have occurred so far. The generation counter *nₑₓₑ* is parsed in block intervals of size β. The size of the block intervals determines the number of considered digital signature candidates per block intervals. The first row 302 shows the state for an unfinished block interval at 3*β < nₑₓₑ* ≤ 4*β*. An unfinished block interval is defined as a block interval which has not yet reached its full size. In the first row 302 the counter *res_{β}* (represented by the light grey rectangles in Fig. 3) includes the number of rejections for the first block interval (0 *< n_exe* ≤ *β*) and for the second block interval (*β < nₑₓₑ* ≤ 2*β*)*.* Both those block intervals are completed, i.e. the block intervals have both reached their full size. The counter *rej_{β}* includes the number of rejections for the last completed block interval (2*β < nₑₓₑ* ≤ 3*β*) and it is represented in Fig. 3 as a black rectangle. The dotted rectangle shows the number of rejections for the unfinished block interval (3*β* < *nₑₓₑ* ≤ 4*β*). This number may be calculated as *nᵣₑⱼ - rej_{β} - res_{β}.* The second row 304 of Fig. 3 shows the state of the system at a later execution time step: the block interval at 3*β* < *nₑₓₑ* ≤ 4*β* has now reached its full size and it is so deemed to be completed. In this case the counter *res_{β}* should be updated to include: the number of rejections for the first block interval (0 *< n_exe* ≤ *β*), the number of rejections for the second block interval (*β* < *nₑₓₑ* ≤ 2*β*) and the number of rejections for the third block interval (2*β* < *nₑₓₑ* ≤ 3*β*). The counter *rej_{β}* has been updated as well and now includes the number of rejections for the last completed block interval (3*β* < *nₑₓₑ* ≤ 4*β*).

In one embodiment, a reset of the global counters and/or the local counters may be performed. This means that the global counters and/or the local counters are set to zero after a chosen number of digital signature candidate generations. This has the effect of preventing the overflow of the counters. The resetting is particularly useful for preventing an overflow of the counter *nᵣₑⱼ* and of the counter *nₑₓₑ.* Those two counters may overflow as the method of the present disclosure is aimed to be used over the entire operational time of a device, i.e. potentially for a very long execution time. The number of digital signature candidate generations, after which the reset may be performed, may be chosen according to the data type used and the highest block size of the block intervals. As example if the highest block size is set to be 1*X*10⁹ and the data type used is set to be 32-bit, the highest value that may be represented by such variables should be 2³² - 1 ≈ 4.3*X*10⁹. An appropriate time for operating a reset may be then set at *nₑₓₑ* ≈ 4*X*10⁹*.*

In one embodiment the block intervals may have the same size β. In this case the residual counter *res_{β}* may be reset after each completed block interval. If a reset takes place after each completed block interval, then there is no need to keep track of the number of rejections in the past block intervals. The residual counter is then obsolete. The rejection counter *rej_{β}* may be discarded as well: the binomial test may be run directly on the rejection counter *nᵣₑⱼ.* Discarding the residual counter and the rejection counter has the effect of improving the computational efficiency.

In the following, two exemplary applications of the method according to the present disclosure will be discussed.

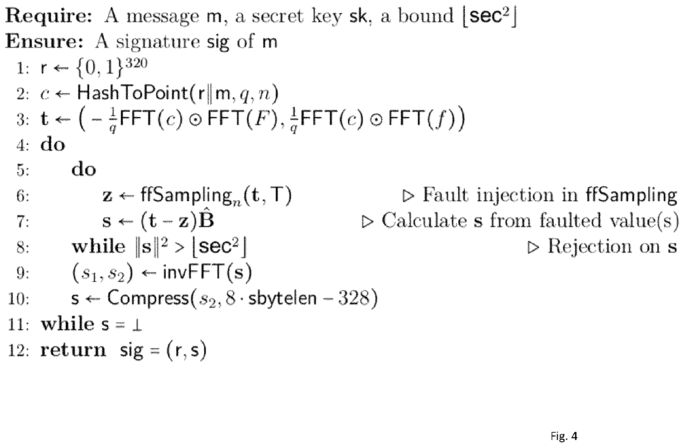

In the first example in Fig. 4 it is supposed that a fault injection attack is performed against the digital signature scheme FALCON. The two main variants of FALCON are FALCON-512 and FALCON -1024, where the numbers 512 and 1024 represent the ring degrees of the digital signature scheme.

Fig. 4 illustrates an algorithm for computing a FALCON digital signature, which takes as input: a message *m*, a signing key *sk,* and a security check *sec* for checking the validity of the signature. The algorithm returns as output a digital signature candidate *s*. Line 7 of the algorithm in Fig. 4 defines the generation of the digital signature candidate *s*. Line 8 of the algorithm in Fig. 4 defines the security checks for the FALCON digital signature scheme. The security check is in this case performed through the calculation of the Euclidian norm. If the digital signature candidate s fails the security check, then the digital signature candidate s is rejected. It is then checked, if a fault injection attack has been performed. The fault injection attack may be represented by a fault vector ***δ*** that is added to the vector z in Line 6 of the algorithm in Fig. 4, so that: $z ′ = z + δ$ The fault injection attack vector ***δ*** may be parsed in two polynomials *δ*₀ and *δ*₁

Accordingly, the signature s of line 7 may be written as $s ′ = \left(t-z′\right) \hat{B}$ Wherein *B̂* is the secret key matrix. By substituting Eq. 5 in Eq. 6 and rearranging the terms, it is possible to rewrite the signature s as a not-faulted signature term and an error term $s ′ = \left(t+z′\right) \hat{B} = \left(t-z-δ\right) \hat{B} = \left(t-z\right) \hat{B} - δ \hat{B} = s - δ \hat{B}$

The regular digital signatures of both FALCON digital signature schemes are distributed according to a distribution with mean 0. The coefficients of the signature candidate s in Line 7 may be considered as being distributed according to a discrete Gaussian distribution with standard deviation σ (which is a parameter of the digital signature scheme) and mean 0. This means that the squared Euclidean norm ∥ *s* ∥² may be approximated with a chi-squared distribution: ${\left‖s\right‖}^{2} = {\sum }_{i = 0}^{2 n - 1} {s}_{i}^{2} = {{\sum }_{i = 0}^{2 n - 1} \left({σZ}_{i}\right)}^{2} = {σ}^{2} {\sum }_{i = 0}^{2 n - 1} \left({Z}_{i}\right) ∼ {σ}^{2} {χ}_{2 n}^{2}$ Where ${χ}_{2 n}^{2}$ is the chi-squared distribution with 2n degrees of freedom and *Zᵢ* are standard normal random variable. The probability that a signature **s** is rejected may be calculated from the cumulative distribution function of ${χ}_{2 n}^{2}$: $\begin{matrix}P \left[\left.{\left‖s\right‖}^{2}>{\left〚\left[μ\right.\right〛}^{2}\right]\right] = 1 - P \left[{\left‖s\right‖}^{2}\leq \left.{\left〚\left[μ\right.\right〛}^{2}\right]\right] = 1 - {F}_{{σ}^{2} {χ}_{2 n}^{2}} \left(\left.{\left〚\left[μ\right.\right〛}^{2}\right]\right) \approx \\ \left\{\begin{matrix}3.925 \times {10}^{- 6} , FALCON - 512 \\ 1.393 \times {10}^{- 10} FALCON - 1024\end{matrix}\right.\end{matrix}$

If an attacker repeatedly injects the same fault vector, then the constant error term shifts the distribution to be centered around the point ***δB̂**.* If several faulted digital signatures are detected, the center of the distribution may be calculated with high accuracy, revealing the fast Fourier transform (FFT) coefficients of ***δB̂**.* The shift of the signature distribution away from the origin means that faulted signatures will generally have a larger norm. Consequently, the rejection rate increases, and the influence of the fault injections on the digital signature is calculated by using the right-sided binomial test explained earlier. The critical value c may be calculated according to Eq. 3 Examples of the critical value c used in the right-sided binomial test for FALCON signature scheme with different parameters are shown in Table 1, where β is the size of the block intervals and α is the significance level. α and β are the parameters used during the binomial test (see Eq. 3).

**Table 1: values of the critical value c for the FALCON signature scheme.**

| β | FALCON-512 | | | FALCON-1024 | | |
|---|---|---|---|---|---|---|
| | α=0.1 | 0.05 | 0.01 | 0.1 | 0.05 | 0.01 |
| 10³ | 1 | 1 | 1 | 1 | 1 | 1 |
| 10⁴ | 2 | 1 | 1 | 1 | 1 | 1 |
| 10⁵ | 3 | 3 | 2 | 1 | 1 | 1 |
| 10⁶ | 10 | 8 | 8 | 1 | 1 | 1 |
| 10⁷ | 56 | 51 | 48 | 1 | 1 | 1 |
| 10⁸ | 440 | 426 | 419 | 2 | 1 | 1 |
| 10⁹ | 4072 | 4029 | 4006 | 2 | 2 | 2 |

The criterion to be used in this case is then *rej_{β} > c*, where the value of *c* is taken from Table 1. If the counter *rej_{β}* fails to fulfill such criterion, then it is determined that a fault injection attack has been executed.

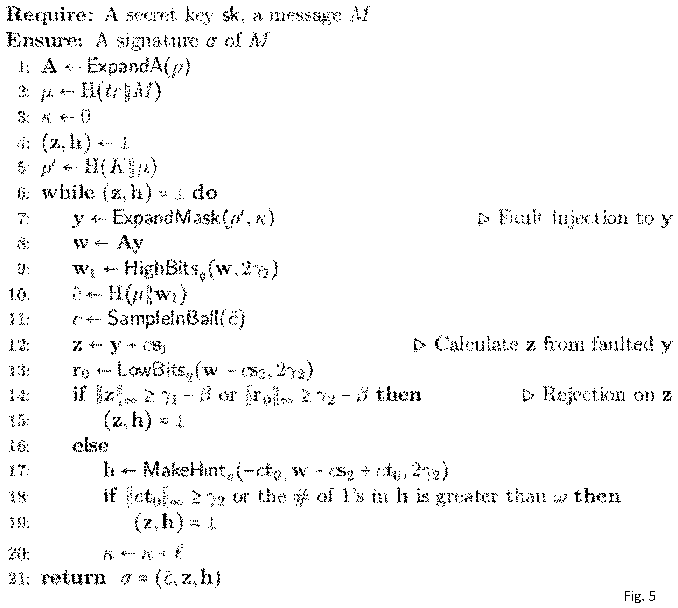

A second example of a method for detecting fault injection attacks according to the present disclosure is now given for the digital signature scheme Dilithium. The three main implementations for Dilithium are: Dilithium-II (2,479 byte - 19,832 bit signature), Dilithium-III (3,352 byte - 26,816 bit signature) and Dilithium-V (4,654 byte - 37,232 bit signature). The digital signature scheme Dilithium is schematically represented in the algorithm of Fig. 5. The digital signature scheme takes as input a message m, and the signing key *sk.* Lines 1 through 5 of the algorithms in Fig. 5 perform pre-processing steps. The vector *y* is the target of an eventual fault injection attack. The security checks are performed as a check on the norm z, as defined in line 14 of the algorithm: the norm z is derived from the vector y (see line 12 of the algorithm in Fig. 5). If the digital signature candidate fails such security check, then the digital signature candidate is rejected. The fault injection attack considered in this example is known as BitSetY and has the effect to modify the coefficients of **z.** The coefficients of a faulted **z** tend to have slightly smaller absolute values. This means that the norm check ∥ *z* ∥_{∞}≥ [*γ*₁ - ϑ] is less likely to cause a rejection. Therefore, the fault injection attack reduces the actual value of *p*₀ and a left-sided binomial test is necessary to detect it.

To calculate the probability of a digital signature candidate to be rejected in the Dilithium digital signature scheme the following equation is used $P \left[\left‖z\right‖\geq \left[{γ}_{1}-ϑ\right]\right] \approx 1 - {e}^{256 ∗ \frac{ϑ l}{{γ}_{1}}}$ where γ₁, ϑ and ℓ are parameters of the digital signature scheme. Depending on the security level, the above expression evaluates to $P \left[\left‖z\right‖\geq \left[{γ}_{1}-ϑ\right]\right] = \left\{\begin{matrix}0.456309 , Dilithium - II \\ 0.380297 , Dilithium - III \\ 0.336453 , Dilithium - V\end{matrix}\right.$

Those numbers are then used to calculate the critical value from Eq. 4 The critical values for different values of β and α are shown in Table 2, where β is the size of the block intervals and α is the significance level. α and β are the parameter used during the binomial test.

**Table 2: values of the critical value c for the Dilithium signature scheme.**

| | Dilithium-II | | | Dilithium-III | | | Dilithium-V | | |
|---|---|---|---|---|---|---|---|---|---|
| β | α = 0.1 | 0.05 | 0.01 | 0.1 | 0.05 | 0.01 | 0.1 | 0.05 | 0.01 |
| 10³ | 419 | 429 | 435 | 344 | 354 | 360 | 301 | 311 | 317 |
| 10⁴ | 4447 | 4481 | 4499 | 3691 | 3724 | 3742 | 3256 | 3288 | 3305 |
| 10⁵ | 45268 | 45376 | 45433 | 37690 | 37795 | 37850 | 33314 | 33416 | 33470 |
| 10⁶ | 455196 | 455536 | 455717 | 379350 | 379680 | 379857 | 335525 | 335847 | 336018 |

The criterion to be used in this case is then *rej_{β}* < c, where the value of *c* is taken from Table 2. If the counter *rej_{β}* fails to fulfill such criterion, then it is determined that a fault injection attack has been executed.

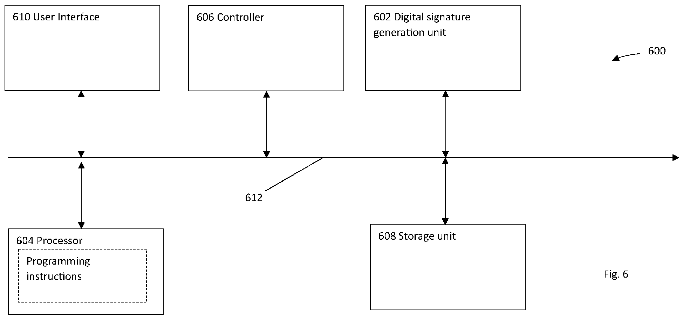

Fig. 6 shows a simplified view of a system according to a second aspect of the present disclosure. The system 600 may be a system-on-a-chip (SoC) implemented on a single integrated circuit, or it may be a combination of chips.

The system 600 may include a digital signature generation unit 602 configured to generate a digital signature candidate. The processing system may further include at least one processor 604 configured to execute programming instructions. Such programming instructions may include all or some of the instructions needed for detecting a fault injection attack to a digital signature according to the method disclosed in the present disclosure. In particular, the at least one processor 604 may be configured to execute the steps 108 to 122 and 110c to 122c of the method described in Fig. 1. The at least one processor 604 may include one or more of any type of processing elements, such as a processor core, microprocessors, microcontrollers, field-programmable gate arrays (FPGAs), application-specific integrated circuits (ASICs), digital signal processor, and the like.

The processing system may further include a controller 606 configured to perform at least one security check on the at least one digital signature candidate.

The system 600 may include at least one storage unit 608. The at least one storage unit 608 may store the probability *p*₀ and/or the global counters and/or the local counters and/or the block interval size β and/or the probabilistic threshold/critical value. The at least one storage unit 608 may be one or more of any type of volatile or non-volatile memory. Examples of memory types include non-volatile memories such as flash, one-time programmable (OTP), EEPROM (electrically erasable programmable read only memory), and the like. Volatile memory types include static random-access memory (SRAM) and dynamic random-access memory (DRAM). Usually, the rejection counter *rej_{β}*, the residual counter *res_{β}* and the two global counters *nᵣₑⱼ* and *nₑₓₑ* are stored in volatile memory during active execution of the method according to the present disclosure. The critical values are usually precomputed values and are a function at least of the significance level and of the block interval size (see Table 1 and Table 2). Because such values are precomputed and only need to be read, they may be stored in non-volatile memories. The same applies to the block interval size β, which is usually set by a user before starting the method of the present disclosure.

The at least one storage unit 608 may have a specific memory requirement, which may be calculated or inferred. The memory requirement for the present disclosure is significantly lower if compared to standard countermeasures like masking against fault injection attacks. **In** fact, given a number *n_{β}* of different block sizes the number of variables required by the method of the present disclosure is 2*n_{β}* + 2 integer variables for the rejection counter *rej_{β}*, the residual counter *res_{β}* and the two global counters *nᵣₑⱼ* and *nₑₓₑ.* As an example, if the size of the block intervals is chosen as {10*ⁱ*: *i* ∈ [3,9]}, then the number of different block sizes β will be *n_{β}=* 7. Furthermore, since the highest considered block size is 10⁹ < 2³², the variables may be realized with unsigned 32-bit integer values. The memory requirement would be: $\left(2⋅7+2\right) ⋅ 32 = 64 bytes ,$ which is lower than the memory requirement for the digital signature schemes FALCON or Dilithium. For comparison, a FALCON signature scheme has a memory requirement around 666 byte or 1280 byte (FALCON-512 and FALCON-1024 respectively). A Dilithium signature scheme has a memory requirement of either 2420, 3293 or 4595 byte (Dilithium-II, III and V respectively).

As further example of the memory requirement of the at least one storage unit 608, if the size of the block intervals is set to {10*ⁱ*: *i* ∈ [3,9]} and a single signature algorithm with one specific parameter set is chosen and a fixed significance level for the binomial test is set, then seven values should be pre-computed and stored. For each additional parameter set or significance level, the number of values to be stored increases linearly.

User interface 610 allows a user to communicate with the system 600 and vice versa. The user interface may be connected to one or more devices for enabling communication with a user such as an administrator. For example, user interface 610 may be enabled for coupling to a display, a mouse, a keyboard, or other input/output device. User interface 610 may also include a network interface having one or more devices for enabling communication with other hardware devices external to the system 600. The user interface could be used by a user for entering a message to be digitally signed according to the present disclosure. The user interface may be further used by a user for selecting a digital signature scheme and/or a significance level and/or for setting the size of the block intervals. The user interface may further emit a warning signal in case that a fault injection attack is detected. The warning signal may be an acoustic warning signal (for example via a sound emitted by the user interface) and/or a visual warning signal (for example via an information box on the display of the user interface) and/or a tactile warning signal (for example via a vibration of the user interface).

The system 600 further includes at least one communication bus represented as arrow 612 in Fig. 6. Such communication bus(es) may be a conventional communication bus(es) having a plurality of conductors for communicating address, data, and control information.

The at least one processor 604, the digital signature generation unit 602, the controller 606, the at least one storage unit 608 and the user interface 610 may be bi-directionally connected to the communication bus 612. This allows for exchange of information among and between the components of the system 600.

From reading the present disclosure, other variations and modifications will be apparent to the skilled person. Such variations and modifications may involve equivalent and other features which are already known in the art of semiconductor device processing, and which may be used instead of, or in addition to, features already described herein.

Although the appended claims are directed to particular combinations of features, it should be understood that the scope of the disclosure of the present specification also includes any novel feature or any novel combination of features disclosed herein either explicitly or implicitly or any generalization thereof, whether or not it relates to the same specification as presently claimed in any claim and whether or not it mitigates any or all of the same technical problems as does the present specification

The present disclosure refers to elements or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness, it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims. Furthermore, the word "may" be used in a permissive sense (i.e., meaning having the potential to), rather than the mandatory sense (i.e., meaning must). Similarly, the words "include," "including," and "includes" mean including, but not limited to. Unless stated otherwise, terms such as "first" and "second" are used to arbitrarily distinguish between the elements such terms describe. Thus, these terms are not necessarily intended to indicate temporal or other prioritization of such elements.

## Claims

1. A method for detecting fault injection attacks in a digital signature scheme comprising the steps of:
initiating a first counter *nₑₓₑ* configured to count a number of generations of digital signature candidates,
initiating a second counter *nᵣₑⱼ* configured to count a number of digital signature candidates which fail security checks,
generating a plurality of digital signature candidates and incrementing the first counter *nₑₓₑ* each time that a digital signature candidate is generated,
selecting a size β and parsing the first counter *nₑₓₑ* in block intervals of said size β,
performing security checks on each digital signature candidate generated,
incrementing the second counter *nᵣₑⱼ* for each digital signature candidate which failed at least one security check,
in response to the current first counter *nₑₓₑ* being an integer multiple of β:
assigning to the last completed block interval of said size β a third counter *rej_{β}*, such third counter *rej_{β}* being configured to count the number of failed security checks in the last completed block interval,
comparing the third counter *rej_{β}* with a criterion based at least on a probabilistic threshold and on said size β,
and in response to the third counter *rej_{β}* not fulfilling the criterion: detecting that at least one fault injection attack has been performed.

2. The method of claim 1, wherein one size β is selected and the third counter *rej_{β}* is reset after comparing it with the criterion.

3. The method of claim 1, wherein multiple sizes β are selected and for each selected size β the method further comprising the step of:
initiating a fourth counter *res_{β}*,
storing the third counter *rej_{β}* of the last completed block interval of the selected size β and
in response to a new block interval of the selected size β being completed:
adding to the fourth counter *res_{β}* the stored third counter *rej_{β}*,
and updating the counter *rej_{β}* as a difference between the second counter *nᵣₑⱼ* and the fourth counter *res_{β}.*

4. The method according to any preceding claim wherein the probabilistic threshold is calculated via a binomial test.

5. The method of claim 4, wherein the probabilistic threshold is calculated via a left-sided binomial test in response to the number of failed security checks being lowered by at least one fault injection attack.

6. The method of claim 4, wherein the probabilistic threshold is calculated via a right-sided binomial test in response to the number of failed security checks being increased by at least one fault injection attack.

7. The method according to any preceding claim, wherein the probabilistic threshold is further calculated as function of at least a significance level.

8. The method according to any preceding claim, wherein the digital signature scheme is chosen from one among a FALCON-512 digital signature scheme, a FALCON-1024 digital signature scheme, a Dilithium-II digital signature scheme, a Dilithium-III digital signature scheme, a Dilithium-V digital signature scheme and a module-lattice-based signature.

9. The method according to any preceding claim wherein the size β is selected from a list.

10. The method according to any preceding claim wherein the first counter and the second counter are reset after reaching a predetermined value.

11. A system for detecting fault injection attacks in a digital signature scheme comprising:
a digital signature generation unit configured to generate a plurality of digital signature candidates,
a controller configured to perform at least one security check on each digital signature candidate created;
a processor configured to:
initiate a first counter *nₑₓₑ* configured to count a number of generations of digital signature candidates,
initiate a second counter *nᵣₑⱼ* configured to count a number of digital signature candidates which fail security checks,
increment the first counter *nₑₓₑ* each time that a digital signature candidate is generated,
parse the first counter *nₑₓₑ* in block intervals of a size β, and
increment the second counter *nᵣₑⱼ* in response to a digital signature candidate failing at least one security check;
a communication bus, configured to connect the controller, the digital signature generation unit and the processor,
wherein the processor is further configured to:
detect if the current first counter *nₑₓₑ* is an integer multiple of β,
and in response to such detection: assign to the last completed block interval of the size β a third counter *rej_{β}*, such third counter *rej_{β}* configured to count a number of failed security checks registered in the last completed block interval,
compare the third counter *rej_{β}* with a criterion based at least on a probabilistic threshold and on said size β,
and in response to the third counter *rej_{β}* not fulfilling the criterion: detect that at least one fault injection attack has been performed.

12. The system according to claim 11 wherein the system further comprises a user interface.

13. The system according to claim 12 wherein the user interface is configured to emit a warning signal in response to detecting the at least one fault injection attack.

14. The system according to any of claims 11 to 13 wherein the system further comprised a storage unit configured to communicate with the communication bus.

15. The system according to claim 14, wherein the storage unit is further configured to store the first counter and/or the second counter and/or a list of the block interval sizes β.
